# EUROPEAN PATENT SPECIFICATION

(11) **EP 1 045 747 B1**
(45) Date of publication and mention of the grant of the patent: **11.12.2002**
(21) Application number: 98902767.7
(22) Date of filing: 05.01.1998
(51) Int. Cl.: B29B 7/26, B29B 7/18, B01F 15/00

(54) **INTERNAL MIXER WITH WIDE THROAT**
INNENMISCHER MIT BREITEN EINLASS
MELANGEUR INTERNE A LARGE AJUTAGE

(43) Date of publication of application: 25.10.2000
(73) Proprietor: THE GOODYEAR TIRE & RUBBER COMPANY, Akron, Ohio 44316-0001 (US)
(72) Inventor: ADAMS, James, Richard, Louisville, OH 44641 (US); CAIN, William, Jackson, Akron, OH 44305 (US); FELITSKY, Robert, Mark, Uniontown, OH 44685 (US); WATTS, William, Arthur, Uniontown, OH 44685 (US)
(74) Representative: Leitz, Paul
(86) International application number: US9800056
(87) International publication number: WO99034964

(56) References cited:
- US-A- 4 053 144
- US-A- 4 830 506
- US-A- 5 492 403

## Description

### Technical Field

This invention relates to high intensity mixing machines for elastomeric matetials. A batch of ingredients including carbon black is fed into a hopper which has a ram weight connected to a piston rod for controlling movement of the materials into the mixer. The hopper is closed except when the ingredients are being loaded.

### Background Art

Internal mixers of an 8,36 cubic feet (237 liter) size such as that shown in U.S. Patent No. 5,492,403 have been made and operated in rubber plants for many years. The mixer body has had a rectangular throat opening of 11.5 inches (29.21 cm) by 32 inches (81.28 cm), piston-cylinder with an 11 inch diameter (27.94 cm) for operation on 100 psi, (7.03 kg/sq cm), factory supplied air pressure providing an effective stock pressure of 27.2 psi (1.91 kg/sq cm). Mixing time, that is the time required to raise the temperature of the rubber mixture from ambient (room temperature) of 80 degrees F - (27 degrees C - 32 degrees C) to a discharge temperature of 350 degrees F, (177 degrees C) has been 3.5 to 4.0 minutes. Loading time has taken from one to several minutes.

The mixer body has been replaced approximately every seven years because of wear in the throat area and inside the mixer body. Complete replacement of these 237 liter mixers with new larger mixers has not been feasible in older rubber plants because of the increased weight of the new mixers which would require extensive changes to the rubber plant. Also, the cost of new mixers and other equipment for the larger size mixer is substantial. [$2,200,000 for a new 9.53 cubic feet (270 liter) mixer assembly.

### Disclosure of the Invention

The present invention is directed to a modification of the present 8.36 cubic feet (237 liter) size internal mixer which does not require enlarging the size of the mixer body. By increasing the size of the throat of the mixer body, adding a new size ram weight and hopper and a new size piston-cylinder apparatus, substantial improvements in production and quality have been achieved. Also, by adding wear plates at the throat area, the time between replacements of the mixer body has been increased.

In accordance with one aspect of the invention there is provided: an internal mixer for mixing petrochemical materials and other ingredients to be vulcanized comprising a mixer body, a mixing chamber in the body, a throat opening for charging the mixer, a discharge opening for discharging the mixer, a ram weight, a hopper and piston-cylinder assembly for urging the ram weight into the throat opening and applying pressure to the petrochemical materials and other ingredients in the mixing chamber, the mixing chamber having a volume not over 8.36 cubic feet (237 liters), characterized by the throat opening having an area of at least 576 square inches (3,175 cm²), the hopper having a cross sectional area of at least 576 square inches and the ram having an area of at least 576 square inches (3,175 cm²).

According to another aspect of the invention there is provided a method of mixing a batch of petrochemical materials and other ingredients in an internal mixer having a mixing chamber with a volume of 8.36 cubic ft (237 liters, and a mixer body throat opening, a discharge opening, a feed hopper mounted on said mixer over said throat opening, a ram weight in said hopper connected to a piston rod of a piston-cylinder assembly mounted on said hopper comprising a.) feeding said batch of petrochemical materials in the form of bales and said other ingredients into said hopper and through said throat opening; b.) moving said ram weight into said throat opening with said throat opening having a width of 18 inches (45,72 cm) and a length of 32 inches (81,28 cm) to provide an effective stock pressure of about 54 psi (3,94 kg/sq cm) with a pressure in said piston cylinder assembly of about 79 psi (5,55 kg/sq cm); c.) mixing said batch at said effective stock pressure until the temperature is raised to a predetermined discharge temperature, and d.) discharging said batch from said mixing chamber through said discharge opening, steps a.), c.) and d.) being known in the art.

### Brief Description of Drawings

Fig. 1 is a fragmentary sectional view of a prior art internal mixer assembly.
Fig. 2 is a fragmentary sectional view of the internal mixer having the same size mixer body as the mixer of Fig. 1 and the wide throat and other improvements embodying the present invention.

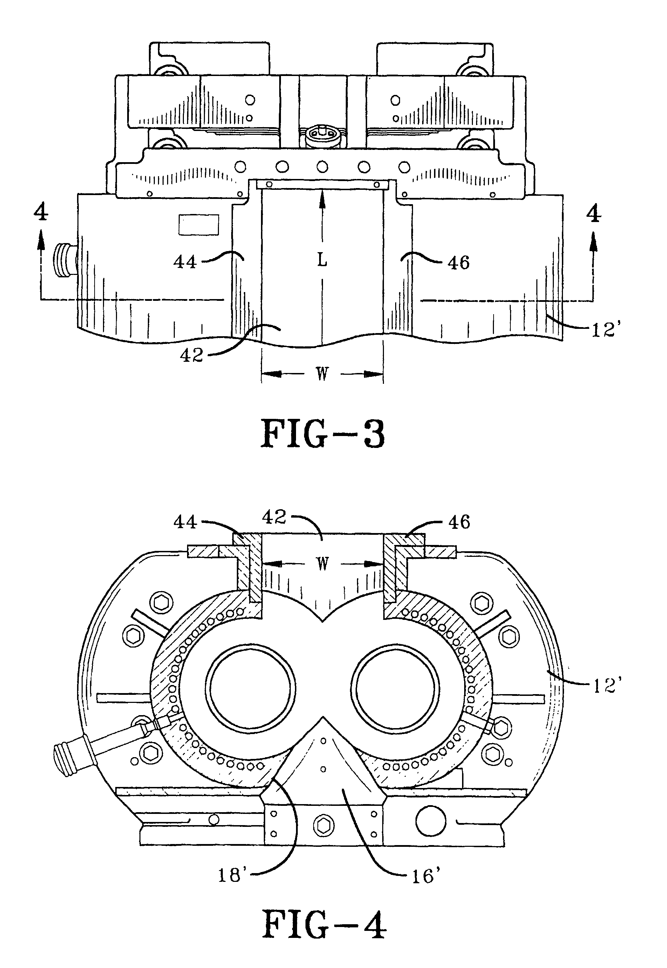

Fig. 3 is an enlarged fragmentry plan view of the mixer body taken along line 3-3 in Fig. 2 showing the wide throat and wear plates.
Fig. 4 is a sectional view of the mixer body showing the throat and wear plates taken along line 4-4 in Fig. 3.

### Detailed Description of the Invention

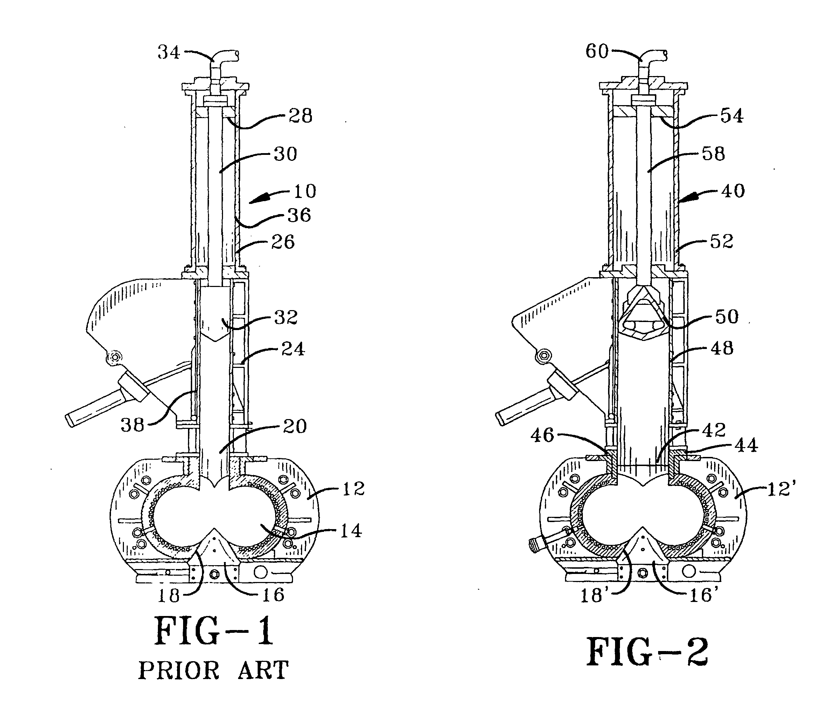

Referring to Fig. 1, a prior art internal mixer assembly 10 is shown having a mixer body 12 with a mixing chamber 14 having a capacity of 8.36 cubic feet (237 liters). A door 16 (shown in the closed condition) is provided to close a discharge opening 18 in the mixer body 12. A throat 20 is provided in an upper wall 22 of the mixer body for receiving the ingredients to be mixed from a hopper 24 mounted on the upper wall 22 of the mixer body 12. A piston-cylinder assembly 26 is mounted on the hopper 24 with a piston 28 fastened to a piston rod 30 connected to a ram weight 32 located in the hopper 24.

In this prior art internal mixer assembly 10 the throat 20 in the mixer body 12 has an opening having a width of 11.5 inches (29.21 cm) and a length of 32 inches (81.28 cm) or a total area of 368 square inches (2,373.65 sq cm). The ram weight 32 and the hopper 24 are of substantially the same size for movement of the ram weight into the throat 20 during operation of this internal mixer assembly 10.

The piston-cylinder assembly 26 has an air inlet pipe 34 in communication with a supply of air pressure from the factory which may be 100 psi (7.03 kg/sq cm). The diameter of the piston 28 is 11 inches (27.94 cm) and is slidably mounted in a cylinder 36 of the piston-cylinder assembly 26. The cylinder 36 also has a diameter of 11 inches (27.94 cm). A loading door 38 is hinged in the hopper 24 and is movable to an open position not shown for adding ingredients to the hopper.

With reference to Fig. 2, an internal mixer assembly 40 is shown embodying the invention wherein the mixer body 12' is the same as the mixer body 12 of the prior art internal mixer assembly 10, except a new throat opening 42 has a width w of 18 inches (45.72 cm) and a length 1 of 32 inches (81.28 cm). This provides an area of 576 square inches (3,715 sq cm) in contrast to the area of the throat 20 of the prior art assembly 10, which is 368 square inches (2,378.60 sq cm). The new throat opening 42 also has wear plates 44 and 46 covering the side surfaces of the opening.

Mounted on the mixer body 12' is a hopper 48 containing a ram weight 50. The ram weight 50 is sized to fit in the new throat opening 42 and has a width of 17.625 inches (44.76 cm) and a length of 31.625 inches (80.32 cm), providing enough clearance to slide into the new throat opening. Mounted on the hopper 48 is a piston-cylinder assembly 52 having a piston 54 slidably mounted in a cylinder 56 with a piston rod 58 connected to the ram weight 50. A pipe 60 in communication with the cylinder 56 and a source of factory air is also provided at the top of the cylinder 56. The piston and cylinder have a diameter of 22 inches (55.88 cm) and the factory supply of air pressure may be around 79 psi (5.55 kg/sq cm). A loading door 62 may be hinged in the side of the hopper 48 and is movable to an open position not shown for adding ingredients to the hopper.

The wear plates 44 and 46 of the new throat opening 42 are of a material such as heat tempered steel plate having a 55-60 Rockwell hardness which is of greater hardness than the cast steel material of the ram weight 50. This results in the ram weight 50 wearing out sooner than the wear plates 44 and 46 at the throat 42 of the mixer body 12'. With this construction there is a savings in the replacement of worn parts since it is less costly to replace the ram weight 50 than the mixer body 12'.

In operation it has been found that substantial improvements in production and quality of the mixing have been achieved with the new internal mixer assembly 40. In loading the mixer 40. bales of petrochemicals, such as natural rubber, are fed into the throat openings 20 and 42. These bales have one side of 11.5 inches by 32 inches (29.21 cm by 81.28 cm) and it has been found that because of the wider throat opening of the new internal mixer assembly 40 there is an improvement in loading which can be done automatically in 45 seconds for each charge. Other ingredients which are mixed in with the petrochemicals are paraffins, carbon black in powder or granule form and process oils which may be heated in liquid form. With the new internal mixer assembly 40 it has been found that the dispersion of the carbon black and heated oils in the mixed product over the dispersion in the mixture produced by the prior art mixer assembly 10 is much improved. This has been determined by examining the product for dispersion under magnification.

The new internal mixer assembly 40 provides mixing under an effective stock pressure of 54 psi (3.94 kg/sq cm). This is compared with an effective stock pressure of 27.2 psi (1.91 kg/sq cm) for the prior art internal mixer assembly 10. Effective stock pressure is the product of the pressure in the cylinder 26 and the face area of the piston 54 divided by the ram weight 50. The mixing time has also been reduced to 1.5 minutes from 3.5 to 4 minutes necessary with the prior art internal mixing assembly 10. The mixing time is determined by the time required to increase the temperature from the feeding temperature, or ambient (room) temperature of 80° to 90° Fahrenheit (27° to 32°C) to a discharge temperature of 350° F (177°C). It is believed the rapid increase in temperature is due to the increased size of the ram weight 50 and the pressure exerted by the ram weight on the batch of rubber in the mixer chamber 14'. After the batch of rubber is mixed, the door 16' is opened to discharge the batch from the mixing chamber 14'. With the new internal mixer assembly 40 the loading time has been reduced to 45 seconds from the 1 to several minutes with the prior art mixer assembly 10. This is a substantial savings in a 24 hour period of continuous operation.

From these test results it has been demonstrated that without any substantial change to the mixer body 12 substantial improvements in production and quality can be obtained. This has resulted in large savings in not having to buy new and larger equipment and redesigning factory space for the larger equipment. Before this invention, larger internal mixers were designed and made with 9.53 cubic feet (270 liter) volumes, whereas the new internal mixer assembly 40 makes this economically unnecessary at this time.

While certain representative embodiments and details have been shown for the purpose of illustrating the invention, it will be apparent to those skilled in the art that various changes and modifications may be made therein without departing from the scope of the invention. Having thus described the invention, it is now claimed:

## Claims

1. An internal mixer (46) for mixing petrochemical materials and other ingredients comprising a mixer body, a mixing chamber (14) in said body, a throat opening (42) for charging said mixer, a discharge opening (18') for discharging said mixer, a ram weight (50), a hopper (48) and a piston-cylinder assembly (52) for urging said ram weight (50) into said throat opening (42) and applying pressure to said petrochemical materials and said other ingredients in said mixing chamber (14) by said mixing chamber (14) having a volume not over 8.36 cubic feet (237 liters), **characterized by** said throat opening (42) having an area of at least 576 square inches (3,715 sq cm), said hopper (48) having a cross sectional area of at least 576 square inches (3,715 sq cm), and said ram weight (50) having an area of at least 576 square inches (3,715 sq cm).

2. The internal mixer (40) of claim 1 further **characterized by** the size of said throat opening (42) and said ram weight (50) being about 18 inches (45.72 cm) wide and about 32 inches (81.28 cm) long.

3. The internal mixer (40) of claim 1 further **characterized by** said hopper (48) having a cross section size of at least 18 inches wide (45.72 cm) and 32 inches long (81.28 cm).

4. The internal mixer (12') of claim 1 further **characterized by** said piston-cylinder assembly (52) having a piston (54) and cylinder (56) diameter of at least 22 inches (55.88 cm).

5. The internal mixer (40) of claim 4 further **characterized by** said piston-cylinder assembly (52) being in communication with a source of factory air pressure of at least 79 psi (5.55 kg/sq cm) whereby effective stock pressure in said mixing chamber (12') will be at least 54 psi (3.94 kg/sq cm).

6. The internal mixer (40) of claim 1 further **characterized by** said throat opening in said mixing chamber being covered with wear plates of a material of greater hardness than the material of said ram weight to increase the wear life of said throat opening and said mixing chamber.

7. A method of mixing a batch of petrochemical materials and other ingredients in an internal mixer (40) having a mixing chamber with a volume of 8.36 cubic ft (237 liters), and a mixer body throat opening (42), a discharge opening (18'), a feed hopper (48) mounted on said mixer (40) over said throat opening (42), a ram weight (50) in said hopper (48) connected to a piston rod (58) of a piston-cylinder assembly (52) mounted on said hopper (48) comprising:
a. feeding said batch of petrochemical materials in the form of bales and said other ingredients into said hopper (48) and through said throat opening (42),
b. moving said ram weight (50) into said throat opening (42) with said throat opening (42) having a width of 18 inches (45.72 cm) and a length of 32 inches (81.28 cm) to provide an effective stock pressure of about 54 psi (3.94 kg/sq cm) with a pressure in said piston cylinder assembly (52) of about 79 psi (5.55 kg/sq cm);
c. mixing said batch at said effective stock pressure until the temperature is raised to a predetermined discharge temperature; and
d. discharging said batch from said mixing chamber (14') through said discharge opening (18').

8. The method of claim 7 further **characterized by** bales of petrochemicals having one side smaller than said mixer body throat opening (18').

9. The method of claim 8 further **characterized by** said one side of said bales being not over 11,5 inches by 32 inches (29.21 cm by 81.28 cm).

10. The method of claim 8 further **characterized by** mixing said batch until the temperature is raised to a discharge temperature of about 350 degrees F (177 degrees C).

11. The method of claim 7 further **characterized by** said ram weight (50) having an area substantially the same as the area of said throat opening (42) to provide elective stock pressure and accelerate the increase in temperature of said batch during said mixing.

## Patentansprüche

1. Innenmischer (46) zum Mischen petrochemischer Materialien und anderer Bestandteile, mit: einem Mischerkörper, einer Mischkammer (14) in dem Körper, einer Halsöffnung (42) zum Beladen des Mischers, einer Entladeöffnung (18') zum Entladen des Mischers, einem Stempelgewicht (50), einem Trichter (48) und einer Kolben-Zylinder-Anordnung (52), um das Stempelgewicht (50) in die Halsöffnung (42) zu drängen und die petrochemischen Materialien und die anderen Bestandteile in der Mischkammer (14) mit Druck zu beaufschlagen, wobei die Mischkammer (14) ein Volumen von nicht mehr als 8,36 Kubikfuß (237 Liter) aufweist,
**dadurch gekennzeichnet,**
**dass** die Halsöffnung (42) eine Fläche von zumindest 576 Quadratzoll (3.715 cm²) aufweist, der Trichter (48) eine Querschnittsfläche von zumindest 576 Quadratzoll (3.715 cm²) aufweist, und das Stempelgewicht (50) eine Fläche von zumindest 576 Quadratzoll (3.715 cm²) aufweist.

2. Innenmischer (40) nach Anspruch 1,
ferner **dadurch gekennzeichnet,**
**dass** die Größe der Halsöffnung (42) und des Stempelgewichts (50) eine Breite von etwa 18 Zoll (45,72 cm) und eine Länge von etwa 32 Zoll (81,28 cm) umfasst.

3. Innenmischer (40) nach Anspruch 1,
ferner **dadurch gekennzeichnet,**
**dass** der Trichter (48) eine Querschnittsgröße mit einer Breite von zumindest 18 Zoll (45, 72 cm) und einer Länge von zumindest 32 Zoll (81,28 cm) umfasst.

4. Innenmischer (12') nach Anspruch 1,
ferner **dadurch gekennzeichnet,**
**dass** die Kolben-Zylinder-Anordnung (52) einen Durchmesser des Kolbens (54) und Zylinders (56) von zumindest 22 Zoll (55,88 cm) umfasst.

5. Innenmischer (40) nach Anspruch 4,
ferner **dadurch gekennzeichnet,**
**dass** die Kolben-Zylinder-Anordnung (52) in Verbindung mit einer Quelle für Fabrikluftdruck von zumindest 79 psi (5,55 kg/cm²) steht, wodurch ein wirksamer Materialdruck in der Mischkammer (12') zumindest 54 psi (3,94 kg/cm²) beträgt.

6. Innenmischer (40) nach Anspruch 1,
ferner **dadurch gekennzeichnet,**
**dass** die Halsöffnung in der Mischkammer mit Verschleißplatten aus einem Material mit größerer Härte als das Material des Stempelgewichts bedeckt ist, um die Lebensdauer der Halsöffnung und der Mischkammer zu erhöhen.

7. Verfahren zum Mischen einer Charge aus petrochemischen Materialien und anderen Bestandteilen in einem Innenmischer (40), der umfasst: eine Mischkammer mit einem Volumen von 8,36 Kubikfuß (237 Liter) und eine Halsöffnung (42) des Mischerkörpers, eine Entladeöffnung (18'), einen Zufuhrtrichter (48), der an dem Mischer (40) über der Halsöffnung (42) befestigt ist, und ein Stempelgewicht (50) in dem Trichter (48), das mit einer Kolbenstange (58) einer Kolben-Zylinder-Anordnung (52) verbunden ist, die an dem Trichter (48) befestigt ist, mit den Schritten, dass:
a.) die Charge aus petrochemischen Materialien in der Form von Ballen und die anderen Bestandteile in den Trichter (48) und durch die Halsöffnüng (42) zugeführt werden,
b.) das Stempelgewicht (50) in die Halsöffnung (42) bewegt wird, wobei die Halsöffnung (42) eine Breite von 18 Zoll (45,72 cm) und eine Länge von 32 Zoll (81,28 cm) aufweist, um einen wirksamen Materialdruck von etwa 54 psi (3,94 kg/cm²) mit einem Druck in der Kolben-Zylinder-Anordnung (52) von etwa 79 psi (5,55 kg/cm²) vorzusehen,
c.) die Charge bei dem wirksamen Materialdruck gemischt wird, bis die Temperatur auf eine vorbestimmte Entladetemperatur angehoben ist, und
d.) die Charge von der Mischkammer (14') durch die Entladeöffnung (18') entladen wird.

8. Verfahren nach Anspruch 7,
ferner **dadurch gekennzeichnet,**
**dass** Ballen aus Petrochemikalien eine Seite aufweisen, die kleiner als die Halsöffnung (18') des Mischerkörpers ist.

9. Verfahren nach Anspruch 8,
ferner **dadurch gekennzeichnet,**
**dass** die eine Seite der Ballen eine Größe von nicht mehr als 11,5 Zoll x 32 Zoll (29,21 cm x 81,28 cm) aufweist.

10. Verfahren nach Anspruch 8,
ferner **dadurch gekennzeichnet,**
**dass** die Charge gemischt wird, bis die Temperatur auf eine Entladetemperatur von 350°F (177°C) angehoben ist.

11. Verfahren nach Anspruch 7,
ferner **dadurch gekennzeichnet,**
**dass** das Stempelgewicht (50) eine Fläche aufweist, die im Wesentlichen gleich der Fläche der Halsöffnung (42) ist, um einen wirksamen Materialdruck vorzusehen und die Temperaturerhöhung der Charge während des Mischens zu beschleunigen.

## Revendications

1. Mélangeur interne (46) pour mélanger des matières pétrochimiques et d'autres ingrédients, comprenant un corps de mélangeur, une chambre de mélange (14) dans ledit corps, une ouverture de gorge (42) pour charger ledit mélangeur, une ouverture de décharge (18) pour décharger ledit mélangeur, un poids hydraulique (50), une trémie (48) et un assemblage piston-cylindre (52) pour presser ledit poids hydraulique (50) dans ladite ouverture de gorge (42) et pour appliquer une pression sur lesdites matières pétrochimiques et sur lesdits autres ingrédients dans ladite chambre de mélange (14), ladite chambre de mélange (14) possédant un volume qui n'est pas supérieur à 8,36 pieds cubes (237 litres), **caractérisé par le fait que** ladite ouverture de gorge (42) possède une aire de surface d'au moins 576 pouces carrés (3715 cm²), ladite trémie (48) possède une superficie de la section d'au moins 576 pouces carrés (3715 cm²) et ledit poids hydraulique (50) possède une aire de surface d'au moins 576 pouces carrés (3715 cm²).

2. Mélangeur interne (40) selon la revendication 1, caractérisé en outré par le fait que la dimension de ladite ouverture de gorge (42) et dudit poids hydraulique (50) s'élève à environ 18 pouces (45,72 cm) en ce qui concerne la largeur et à environ 32 pouces (81,28 cm) en ce qui concerne la longueur.

3. Mélangeur interne (40) selon la revendication 1, **caractérisé en outre par le fait que** la dimension de ladite trémie (48) en direction transversale s'élève à au moins 18 pouces (45,72 cm) et sa longueur s'élève à 32 pouces (81,28 cm).

4. Mélangeur interne (12') selon la revendication 1, **caractérisé en outre par le fait que** ledit assemblage de piston-cylindre (50) possède un piston (54) et un cylindre (56) dont le diamètre s'élève à au moins 22 pouces (55,88 cm).

5. Mélangeur interne (40) selon la revendication 4, **caractérisé en outre par le fait que** ledit assemblage de piston-cylindre (50) est mis en communication avec une source de pression d'air d'usine d'au moins 79 psi (5,55 kg/cm²), la pression de remplissage effective dans ladite chambre de mélange (12') s'élevant à au moins 54 psi (3,94 kg/cm²).

6. Mélangeur interne (40) selon la revendication 1, **caractérisé en outre par le fait que** ladite ouverture de gorge dans ladite chambre de mélange est recouverte par des plaques résistant à l'usure dont la matière possède une dureté supérieure à celle de la matière et dudit poids hydraulique afin d'augmenter la durée de vie de ladite ouverture de gorge et de ladite chambre de mélange.

7. Procédé de mélange d'un lot de matières pétrochimiques et d'autres ingrédients dans un mélangeur interne (40) possédant une chambre de mélange dont le volume s'élève à 8,36 pieds cubes (237 litres), et une ouverture de gorge (42) de corps de mélangeur, une ouverture de décharge (18'), une trémie d'alimentation (48) montée sur ledit mélangeur (40) par-dessus ladite ouverture de gorge (42), un poids hydraulique (50) dans ladite trémie (48) reliée à une tige de piston (58) d'un assemblage de piston-cylindre (52) monté sur ladite trémie (48), comprenant le fait de :
a. alimenter ledit lot de matières pétrochimiques sous la forme de balles et lesdits autres ingrédients dans le ladite trémie (48) à travers ladite ouverture de gorge (42) ;
b. déplacer ledit poids hydraulique (50) dans ladite ouverture de gorge (42), ladite ouverture de gorge (42) possédant une largeur de 18 pouces (45,72 cm) et une longueur de 32 pouces (81,28 cm) pour obtenir une pression de remplissage effective d'environ 54 psi (3,94 kg/cm²) avec une pression dans ledit assemblage de piston-cylindre (50) d'environ 79 psi (5,55 kg/cm²) ;
c. mélanger ledit lot à ladite pression de remplissage effective jusqu'à ce que la température s'élève pour atteindre une température de décharge prédéterminée ; et
d. décharger ledit lot de ladite chambre de mélange (14') à travers ladite ouverture de décharge (18').

8. Procédé selon la revendication 7, **caractérisé en outre par le fait que** les balles de produits pétrochimiques possèdent un côté qui est plus petit que ladite ouverture de gorge (18') du corps de mélangeur.

9. Procédé selon la revendication 8, **caractérisé en outre par le fait que** ledit côté desdites balles n'est pas supérieur à 11,5 pouces sur 32 pouces (29,21 cm sur 81,28 cm).

10. Procédé selon la revendication 8, **caractérisé en outre par** le fait de mélanger ledit lot jusqu'à ce que la température s'élève pour atteindre une température de décharge d'environ 350 degrés F (177 degrés C).

11. Procédé selon la revendication 7, **caractérisé en outre par le fait que** ledit poids hydraulique (50) possède une aire de surface essentiellement égale à l'aire de surface de ladite ouverture de gorge (42) pour obtenir une pression de remplissage efficace et accélérer l'élévation de la température dudit lot au cours dudit mélange.
